# FASCICULE DE BREVET EUROPEEN

(11) **EP 3 947 919 B1**
(45) Date de publication et mention de la délivrance du brevet: **15.02.2023**
(21) Numéro de dépôt: 20727310.3
(22) Date de dépôt: 26.05.2020
(51) Int. Cl.: F01D 11/12, F01D 11/00

(54) **JOINT D'ÉTANCHÉITÉ DYNAMIQUE POUR TURBOMACHINE COMPRENANT UNE PIÈCE ABRADABLE MULTICOUCHE**
DYNAMISCHE DICHTUNG FÜR EINE TURBOMASCHINE MIT EINEM MEHRSCHICHTIGEN EINLAUFTEIL
DYNAMIC SEAL FOR A TURBOMACHINE COMPRISING A MULTI-LAYER ABRADABLE PART

(30) Priorité: 29.05.2019 FR 1905724
(43) Date de publication de la demande: 09.02.2022
(73) Titulaire: SAFRAN AIRCRAFT ENGINES, 75015 Paris (FR)
(72) Inventeur: DREANO, Sébastien Vincent François, 77550 Moissy-Cramayel (FR); ANTONY, Pierre, 77550 Moissy-Cramayel (FR); GARNIER, Fabien Stéphane, 77550 Moissy-Cramayel (FR)
(74) Mandataire: Brevalex
(86) Numéro de dépôt international: PCT/EP2020/064517
(87) Numéro de publication internationale: WO 2020/239732

(56) Documents cités:
- EP-A1- 3 135 869
- WO-A1-2015/034636
- FR-A- 1 547 085
- US-B1- 9 816 388

## Description

### Domaine technique

L'invention concerne le domaine des turbomachines, en particulier d'aéronef, et plus spécifiquement des joints d'étanchéité dynamique mis en oeuvre dans des turbines ou des compresseurs de telles turbomachines. L'invention s'applique à tout type de turbomachine, tel qu'un turboréacteur ou un turbopropulseur.

### État de la technique antérieure

Un joint d'étanchéité dynamique permet d'optimiser les performances d'une turbomachine, typiquement en réduisant les fuites de gaz pressurisés.

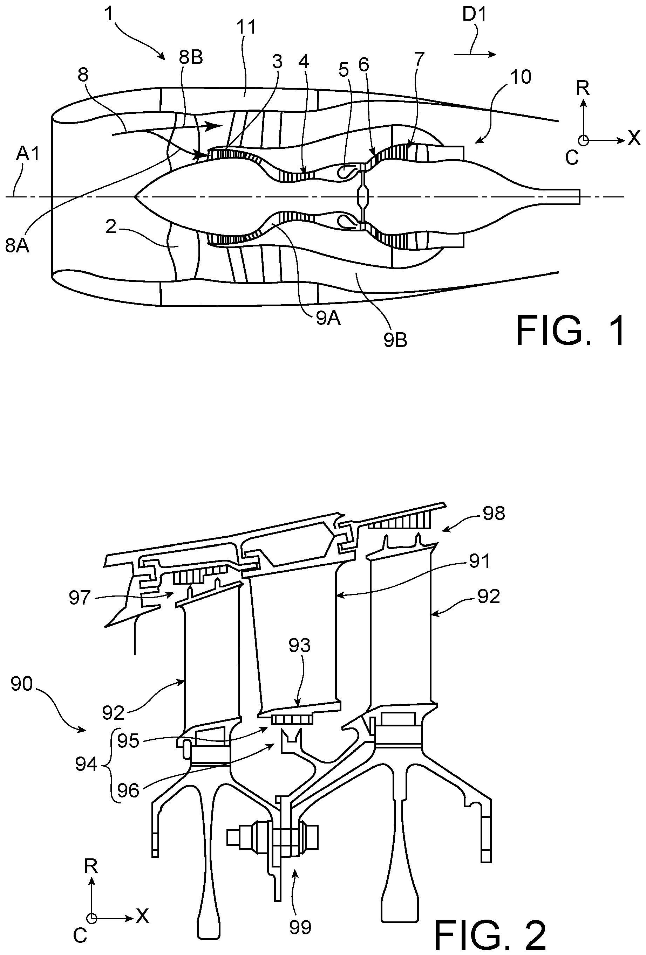

La figure 2 montre une turbine 90 de turbomachine d'aéronef de l'art antérieur. De manière conventionnelle, cette turbine 90 comprend plusieurs étages permettant de récupérer une partie de l'énergie de combustion pour faire tourner un rotor de la turbine. Chaque étage comprend un aubage fixe 91, appartenant à un stator de la turbine 90, et un aubage mobile 92 constituant une partie du rotor. L'aubage fixe 91 est délimité radialement à l'intérieur par une paroi annulaire interne 93. Un joint d'étanchéité dynamique 94 est typiquement prévu sous la face radialement interne de cette paroi annulaire 93 afin de limiter la circulation de gaz radialement à l'intérieur de celle-ci.

Le joint 94 de la figure 2 comprend une pièce d'usure 95 abradable, solidaire du stator de la turbine 90, et une paire de léchettes 96 solidaires du rotor. Les léchettes 96 sont agencées pour interagir avec la pièce d'usure 95 de sorte que, au moins durant une phase de rodage de la turbomachine, lorsque le rotor et donc les léchettes 96 sont entraînés en rotation, le contact des léchettes 96 avec la pièce d'usure 95 tend à user cette dernière. Typiquement, la pièce d'usure 95 consiste en une structure en nid d'abeilles, laquelle favorise son abradabilité. Cette structure forme généralement des alvéoles dont la profondeur définit l'épaisseur de la pièce d'usure 95.

EP 3 135 869 A, WO 2015/034636 A, FR 1 547 085 A et US 9 816 388 B divulguent des exemples de joint d'étanchéité dynamique.

Ce type de joint d'étanchéité dynamique a notamment pour inconvénient qu'il entraîne des fuites résiduelles de gaz, ceux-ci pouvant typiquement contourner les léchettes en passant à l'intérieur des alvéoles, limitant ainsi l'efficacité du joint.

Un but de l'invention est d'améliorer l'efficacité d'un tel joint d'étanchéité dynamique en réduisant les fuites résiduelles produites au niveau de la zone de contact entre léchette(s) et pièce d'usure.

L'invention a aussi pour but de proposer un joint d'étanchéité dynamique dont la pièce d'usure présente de bonnes propriétés d'abradabilité tout en permettant sa fabrication à coûts réduits.

### Exposé de l'invention

A cet effet, l'invention a pour objet un joint d'étanchéité dynamique pour turbomachine d'aéronef, comprenant une partie fixe pourvue d'au moins une pièce d'usure abradable et une partie mobile en rotation autour d'un axe central, la partie mobile comprenant au moins une léchette agencée pour interagir avec l'au moins une pièce d'usure lors de la rotation de la partie mobile autour de l'axe central.

Selon l'invention, l'au moins une pièce d'usure comporte une structure formant des cavités agencées en une ou plusieurs séries de sorte que, dans chaque série, les cavités de cette série sont superposées radialement par rapport à l'axe central, ladite structure étant conformée au moins pour limiter la circulation de gaz entre chaque paire de cavités radialement adjacentes, chaque cavité de l'au moins une pièce d'usure constituant un canal s'étendant circonférentiellement par rapport à l'axe central sur toute la dimension circonférentielle de la pièce d'usure.

L'expression « [...] conformée *ou moins* pour limiter [...] » signifie que ladite structure de l'au moins une pièce d'usure est conformée :
- soit pour limiter la circulation de gaz entre chaque paire de cavités radialement adjacentes, par exemple par une restriction de section aéraulique,
- soit pour empêcher toute circulation de gaz entre chaque paire de cavités radialement adjacentes, par exemple par obturation de l'une par rapport à l'autre de ces cavités.

Une telle superposition radiale de cavités permet de réduire le volume effectif d'une cavité dans laquelle la léchette s'engage lors de la rotation de la partie mobile du joint, cela quelle que soit l'épaisseur de la pièce d'usure. En effet, par exemple lorsque la pièce d'usure est faiblement usée, cette cavité est radialement adjacente à une autre cavité dont elle est séparée par une partie de la structure de la pièce d'usure qui limite ou empêche la circulation de gaz de l'une à l'autre de ces cavités. Cela permet de réduire les fuites résiduelles au niveau de la zone de contact de la léchette et de la pièce d'usure, puisque les gaz susceptibles de contourner la léchette en passant dans une telle cavité disposent d'un volume réduit relativement à une structure qui ne délimiterait pas radialement plusieurs cavités.

L'invention permet donc de réaliser une pièce d'usure comprenant plusieurs couches de cavités de manière à réduire les fuites résiduelles quel que soit le niveau d'usure de la pièce d'usure.

Selon une première variante de réalisation, ladite structure de l'au moins une pièce d'usure peut former, entre chaque paire de cavités radialement adjacentes, une paroi pleine empêchant toute circulation de gaz de l'une à l'autre de ces cavités.

Selon une deuxième variante de réalisation, ladite structure de l'au moins une pièce d'usure peut former, entre chaque paire de cavités radialement adjacentes, un obstacle ménageant une ouverture entre ces cavités de manière à limiter la circulation de gaz de l'une à l'autre de ces cavités.

En effet, il n'est pas indispensable d'isoler totalement deux cavités radialement adjacentes pour réduire significativement les fuites résiduelles. Une restriction de section laissant une ouverture entre deux cavités radialement adjacentes peut s'avérer suffisante pour empêcher tout ou partie des gaz contournant la léchette de traverser une telle ouverture, en fonction bien entendu des dimensions d'une telle ouverture par rapport aux dimensions des cavités. Une telle ouverture peut typiquement être utilisée pour évacuer de la poudre accumulée dans une cavité lors de la fabrication de la pièce d'usure.

De préférence, l'au moins une pièce d'usure peut comporter plusieurs séries de cavités s'étendant circonférentiellement par rapport à l'axe central.

La partie fixe du joint d'étanchéité dynamique peut être pourvue d'une unique pièce d'usure formant un anneau centré sur ledit axe central.

Dans ce cas, ladite dimension circonférentielle de cette pièce d'usure unique est de 360°.

Alternativement, la partie fixe peut être pourvue de plusieurs pièces d'usure agencées circonférentiellement bout à bout de manière à former ensemble un anneau centré sur ledit axe central.

Dans ce cas, ladite dimension circonférentielle de chacune des pièces d'usure est inférieure à 360°.

L'invention concerne aussi une turbine ou un compresseur comprenant un tel joint d'étanchéité dynamique, ainsi qu'une turbomachine équipée d'une telle turbine et/ou d'un tel compresseur et plus généralement d'un tel joint d'étanchéité dynamique.

L'invention a aussi pour objet un procédé de fabrication d'un tel joint d'étanchéité dynamique.

De préférence, ce procédé peut comprendre une étape de fabrication additive de l'au moins une pièce d'usure.

La fabrication additive permet d'obtenir une pièce d'usure dotée de bonnes qualités structurales et d'abradabilité à coûts réduits.

L'abradabilité d'une pièce d'usure ainsi fabriquée est améliorée par comparaison avec une pièce d'usure fabriquée selon un procédé conventionnel. Dans l'art antérieur, une pièce d'usure abradable de type nid d'abeilles est typiquement fabriquée par soudage de feuilles métalliques gaufrées, les soudures tendant à durcir la pièce et à diminuer ainsi sa capacité à s'user.

Dans un mode de réalisation, ce procédé peut comprendre une étape de fabrication additive, d'un seul tenant, de l'au moins une pièce d'usure et d'un élément de support de la partie fixe du joint d'étanchéité dynamique.

La fabrication monobloc de la pièce d'usure et de son élément de support permet d'obtenir de bonnes propriétés d'abradabilité sur toute l'épaisseur de la pièce d'usure, par comparaison avec un assemblage par brasage, lequel tend à durcir la pièce d'usure en raison notamment des remontées de brasure par capillarité.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe axiale d'un ensemble propulsif d'aéronef comprenant une turbomachine de type turboréacteur à double flux ;
[Fig. 2] (déjà décrite) est une demi-vue schématique partielle en coupe axiale d'une turbine basse-pression de turbomachine, comprenant un joint d'étanchéité dynamique de l'art antérieur ;
[Fig. 3] est une vue schématique partielle d'un joint d'étanchéité dynamique selon l'invention ;
[Fig. 4] est une vue schématique partielle en perspective d'une pièce d'usure de joint d'étanchéité dynamique selon un premier mode de réalisation, qui ne fait partie de l'invention;
[Fig. 5] est une vue schématique partielle en coupe axiale d'une pièce d'usure de joint d'étanchéité dynamique selon un deuxième mode de réalisation, qui ne fait partie de l'invention;
[Fig. 6] est une vue schématique partielle de la pièce d'usure de la figure 5, montrant la forme hexagonale des cavité, qui ne fait partie de l'invention;
[Fig. 7] est une vue schématique partielle en perspective d'une pièce d'usure de joint d'étanchéité dynamique selon un troisième mode de réalisation conforme à l'invention ;
[Fig. 8] est une vue schématique partielle en coupe axiale de la pièce d'usure de la figure 7 ;
[Fig. 9] est une vue schématique partielle en perspective d'une pièce d'usure de joint d'étanchéité dynamique selon un quatrième mode de réalisation conforme à l'invention ;
[Fig. 10] est une vue schématique partielle en coupe axiale de la pièce d'usure de la figure 9 ;
[Fig. 11] est une vue schématique partielle en perspective d'une pièce d'usure de joint d'étanchéité dynamique selon un cinquième mode de réalisation conforme à l'invention ;
[Fig. 12] est une vue schématique partielle en coupe axiale de la pièce d'usure de la figure 11 ;
[Fig. 13] est une vue schématique partielle en perspective d'une pièce d'usure de joint d'étanchéité dynamique selon un sixième mode de réalisation conforme à l'invention ;
[Fig. 14] est une vue schématique partielle en coupe axiale de la pièce d'usure de la figure 13.

### Description détaillée de modes de réalisation

L'invention concerne une turbomachine, par exemple pour un ensemble propulsif 1 d'aéronef (non représenté) tel que représenté à la figure 1. Dans cet exemple, la turbomachine 10, qui est logée dans une nacelle 11 de l'ensemble propulsif 1, est un turboréacteur à double flux bien connu dans le domaine aéronautique. Bien entendu, l'invention n'est pas limitée à une telle turbomachine et peut s'appliquer à tout type de turbomachine, tel que par exemple un turbopropulseur.

La turbomachine 10 présente un axe central longitudinal A1 autour duquel s'étendent ses différents composants, en l'occurrence, de l'amont vers l'aval de la turbomachine 10, une soufflante 2, un compresseur basse pression 3, un compresseur haute pression 4, une chambre de combustion 5, une turbine haute pression 6 et une turbine basse pression 7. Les compresseurs 3 et 4, la chambre de combustion 5 et les turbines 6 et 7 forment un générateur de gaz.

De manière conventionnelle, lors du fonctionnement d'un tel turboréacteur 10 à double flux, un écoulement d'air 8 pénètre dans l'ensemble propulsif 1 par une entrée d'air en amont de la nacelle 11, traverse la soufflante 2 puis se divise en un flux primaire 8A central et un flux secondaire 8B. Le flux primaire 8A s'écoule dans une veine principale 9A de circulation des gaz traversant les compresseurs 3 et 4, la chambre de combustion 5 et les turbines 6 et 7. Le flux secondaire 8B s'écoule quant à lui dans une veine secondaire 9B entourant le générateur de gaz du turboréacteur 10 et délimitée radialement vers l'extérieur par la nacelle 11.

Dans l'ensemble de cette description, les termes « amont » et « aval » sont définis relativement à une direction principale D1 d'écoulement des gaz à travers l'ensemble propulsif 1 selon la direction axiale X. Les termes « interne » et « externe » font respectivement référence à une relative proximité, et un relatif éloignement, d'un élément par rapport à l'axe central A1. La direction axiale X est une direction parallèle à l'axe central longitudinal A1 de la turbomachine 10 ; la direction radiale R est, en tout point, une direction orthogonale à l'axe central A1 et passant par ce dernier; et la direction circonférentielle ou tangentielle C est, en tout point, une direction orthogonale à la direction radiale R et à l'axe central A1.

La figure 2, déjà décrite, représente de manière plus détaillée une partie d'une turbine 90 de l'art antérieur. Une telle turbine constitue typiquement la turbine basse pression 6 d'un turboréacteur d'ensemble propulsif du type représenté à la figure 1.

L'invention se rapporte plus spécifiquement à un joint d'étanchéité dynamique, pouvant notamment remplacer les joints d'étanchéité dynamiques 94, 97 et/ou 98 de la turbine 90 de la figure 2.

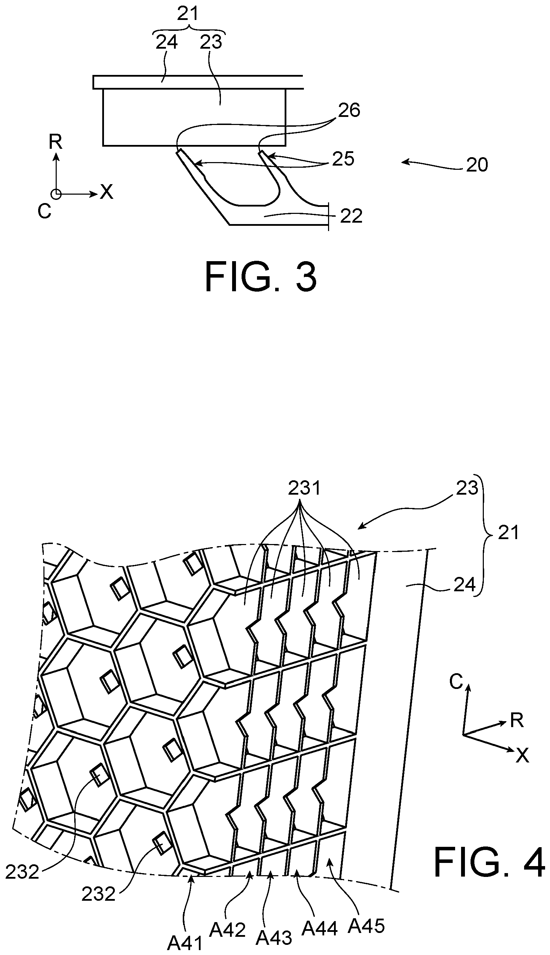

Un joint d'étanchéité dynamique 20 est partiellement représenté à la figure 3. Ce joint 20 est constitué d'une partie fixe 21 et d'une partie mobile 22.

La partie fixe 21 du joint 20 est prévue pour être reliée à un stator de turbomachine, par exemple au stator du compresseur 3 ou 4, ou de la turbine 6 ou 7 de la turbomachine 10. En référence à la configuration connue de la figure 2, la partie fixe 21 du joint 20 peut ainsi être fixée sur la face radialement interne de la paroi annulaire interne 93 de l'aubage fixe 91 de la turbine 90.

Plus précisément, la partie fixe 21 du joint 20 comprend une pièce d'usure 23 et un élément de support 24 permettant de maintenir la pièce d'usure 23 fixement relativement à la partie mobile 22. Toujours en référence à la configuration connue de la figure 2, la fixation de la partie fixe 21 du joint 20 sur la paroi annulaire interne 93 peut ici être réalisée par fixation de l'élément de support 24 sur ladite face radialement interne de cette paroi 93.

Dans cet exemple, la pièce d'usure 23 est située radialement à l'intérieur de l'élément de support 24.

La partie mobile 22 du joint 20 est prévue pour être reliée à un rotor de turbomachine, par exemple au rotor du compresseur 3 ou 4, ou de la turbine 6 ou 7 de la turbomachine 10. En référence à la configuration connue de la figure 2, la partie mobile 22 du joint 20 peut être reliée à la bride annulaire 99 de liaison des aubages mobiles 92. La partie mobile 22 du joint 20 peut ainsi être solidarisée au rotor, en rotation autour de l'axe central A1 de la turbomachine 10.

Dans l'exemple de la figure 3, la partie mobile 22 du joint 20 comprend deux léchettes 25 annulaires agencées pour interagir avec la pièce d'usure 23 lors de la rotation de la partie mobile 22 autour de l'axe central A1.

Chaque léchette 25 comprend une extrémité d'usinage 26 agencée en regard et à faible distance de la pièce d'usure 23, afin de limiter au mieux l'écoulement des gaz entre la partie fixe 21 et la partie mobile 22 du joint 20, à la manière d'un labyrinthe d'étanchéité.

De manière connue en soi, les léchettes 25 et la pièce d'usure 23 sont fabriquées dans des matériaux respectifs permettant aux léchettes 25 d'usiner par leur extrémité d'usinage 26 la pièce d'usure 23 lors de la rotation du rotor. Autrement dit, la pièce d'usure 23 est abradable.

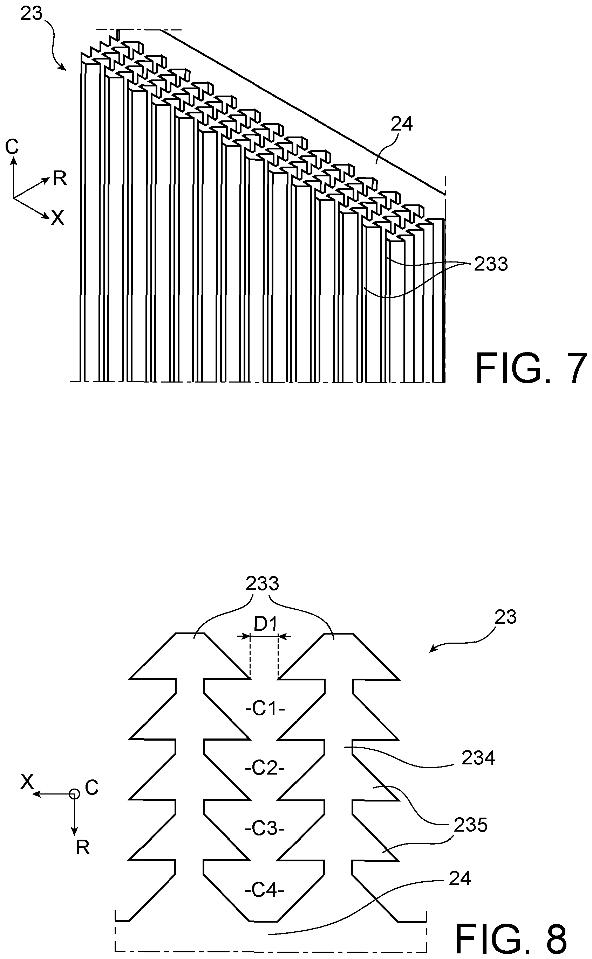

L'invention se caractérise plus spécifiquement par la structure de la pièce d'usure 23, dont plusieurs modes de réalisation sont illustrés aux figures 7 à 14.

Les figures 4 à 6 montrent d'autres modes de réalisation d'une pièce d'usure 23 qui ne font pas partie de l'invention.

Dans chacun des modes de réalisation des figures 4 à 14, la pièce d'usure 23 a une structure formant plusieurs couches de cavités.

Plus précisément, en référence au mode de réalisation de la figure 4, la pièce d'usure 23 comprend plusieurs couches de cavités espacées les unes des autres le long de la direction radiale R.

Dans cet exemple, pour chaque couche, les cavités s'étendent à la fois axialement, c'est-à-dire le long de la direction axiale X, et circonférentiellement, c'est-à-dire le long de la direction circonférentielle C.

Autrement dit, les cavités de la pièce d'usure 23 sont agencées en plusieurs séries de sorte que, dans chaque série, les cavités de cette série sont superposées radialement par rapport à l'axe central A1.

La pièce d'usure 23 est conformée pour limiter ou empêcher la circulation de gaz entre chaque paire de cavités radialement adjacentes, c'est-à-dire pour limiter ou empêcher la circulation de gaz d'une première cavité appartenant à l'une des couches à une deuxième cavité radialement adjacente, c'est-à-dire appartenant à une couche adjacente à la couche comportant la première cavité.

Dans les modes de réalisation des figures 4 à 6, chaque couche a une structure en nid d'abeilles, la pièce d'usure 23 formant ainsi une structure comportant une superposition d'âmes alvéolaires de type nid d'abeilles. Les cavités de chaque série sont respectivement constituées par des alvéoles respectives des âmes alvéolaires.

Dans l'exemple de la figure 4, la pièce d'usure 23 comprend cinq âmes A41-A45 séparées deux à deux par des parois 231. Les parois 231 comprennent des orifices 232 formant chacun une ouverture entre deux cavités radialement adjacentes. Les orifices 232 ont dans cet exemple une section en losange et sont destinés à l'évacuation de poudre (voir plus loin). Les orifices 232 sont dimensionnés pour permettre une telle évacuation de poudre tout en limitant le débit de gaz susceptible de passer d'une cavité à l'autre. Bien entendu, selon le procédé de fabrication utilisé, de tels orifices 232 peuvent s'avérer inutiles de sorte que, dans des modes de réalisation non représentés, les parois 231 peuvent être pleines et obturer totalement les cavités les unes par rapport aux autres.

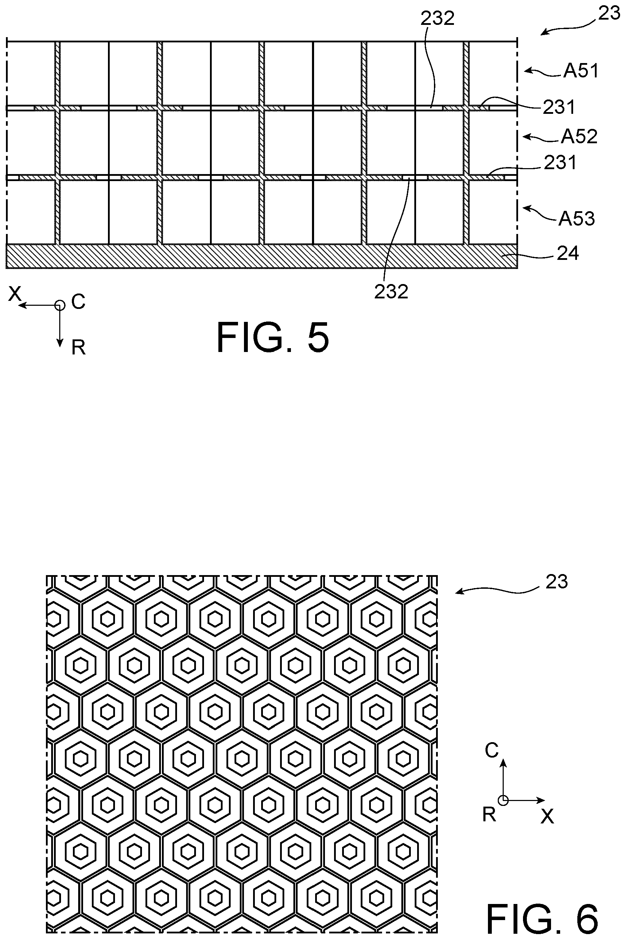

Dans l'exemple des figures 5 et 6, la pièce d'usure 23 comprend trois âmes A51-A53 séparées deux à deux par des parois 231. Dans cet exemple, les parois 231 comprennent des orifices 232 de section hexagonale formant chacun une ouverture entre deux cavités radialement adjacentes. La fonction de ces orifices est similaire à celle des orifices du mode de réalisation de la figure 4 (voir ci-dessus).

Dans les modes de réalisation des figures 7 à 14 conformes à l'invention, chaque cavité forme un canal s'étendant circonférentiellement par rapport à l'axe central A1, sur toute la dimension circonférentielle de la pièce d'usure 23.

Dans le mode de réalisation des figures 7 et 8, la pièce d'usure 23 comprend des barres circonférentielles 233. Chaque barre 233 comprend une partie centrale 234 et des branches 235 radialement espacées les unes des autres de manière à délimiter des cavités C1-C4 ouvertes les unes sur les autres. Les branches 235 forment des restrictions de section aéraulique entre cavités radialement adjacentes (voir figure 8). Dans l'exemple illustré, chaque branche 235 est en forme de sapin.

Autrement dit, les banches 235 forment, entre chaque paire de cavités radialement adjacentes, un obstacle ménageant une ouverture entre ces cavités de manière à limiter la circulation de gaz de l'une à l'autre de ces cavités.

Les ouvertures ménagées entre cavités radialement adjacentes ont une dimension D1 apte à limiter significativement la circulation de gaz entre ces cavités, compte tenu de leurs dimensions propres. Bien entendu, ces ouvertures peuvent aussi être utilisées pour l'évacuation de poudre, en particulier lorsque la pièce d'usure 23 est annulaire et fabriquée par un procédé de fabrication additive par fusion laser sur lit de poudre (voir plus loin).

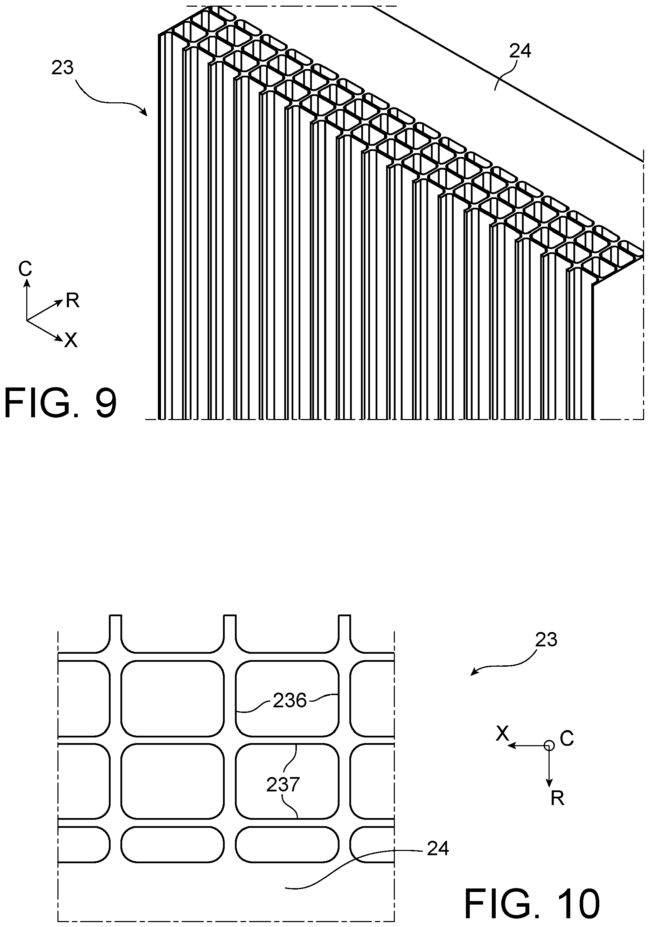

Dans le mode de réalisation des figures 9 et 10, la pièce d'usure 23 a des parois 236 délimitant les cavités axialement et des parois 237 délimitant les cavités radialement.

Dans cet exemple, les parois 236 et 237 sont pleines et empêchent donc toute circulation de gaz entre cavités adjacentes.

Dans un mode de réalisation non représenté, les parois 237 peuvent comprendre des orifices ou ouvertures entre cavités radialement adjacentes pour le dépoudrage (voir plus loin).

En référence à la figure 10, les cavités de cette pièce d'usure 23 ont une section sensiblement rectangulaire, les parois 236 et 237 étant sensiblement droites selon la direction radiale R et axiale X respectivement.

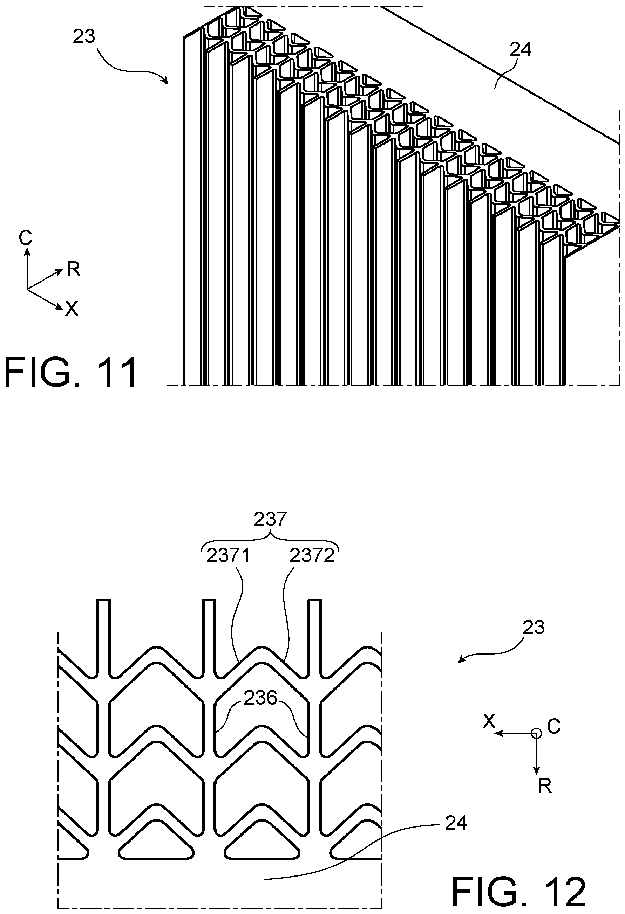

Le mode de réalisation des figures 11 et 12 se distingue de celui des figures 9 et 10 par la forme des parois 237 : chaque paroi 237 délimitant radialement deux cavités adjacentes comprend deux parties 2371 et 2372 s'étendant chacune à la fois le long de la direction axiale X et le long de la direction radiale R, de sorte que les cavités ont une section axiale en « V ».

Bien entendu, les parois 236 et 237 de ces différents modes de réalisation peuvent avoir des formes différentes et par suite les cavités de la pièce d'usure 23 peuvent avoir une section de toute forme conférant à la pièce d'usure 23 de remplir sa fonction.

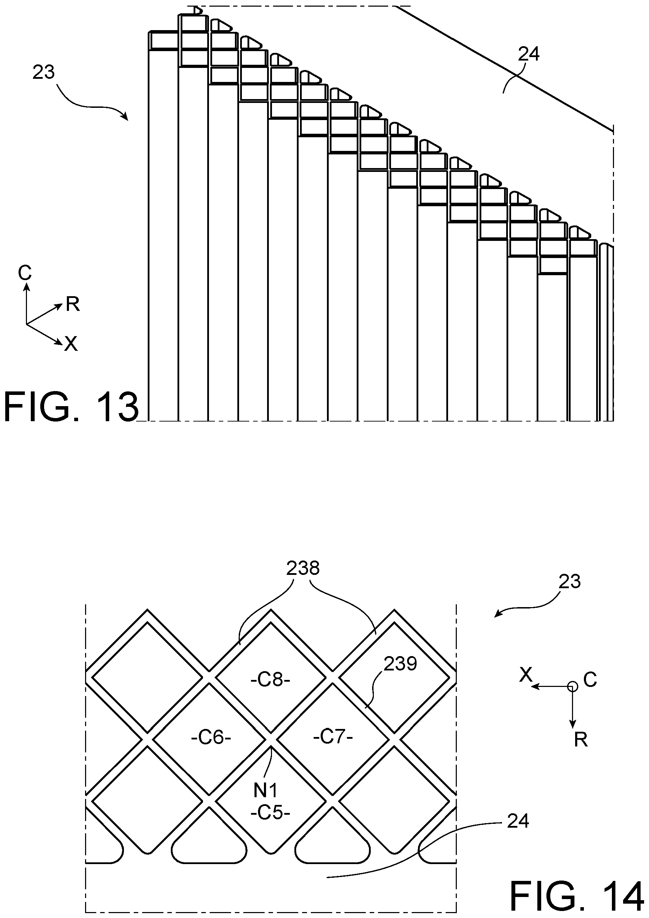

Dans le mode de réalisation des figures 13 et 14, la pièce d'usure 23 a des parois 238 et 239 sensiblement droites dans le plan X-R et perpendiculaires entre elles, qui s'étendent chacune à la fois le long de la direction axiale X et le long de la direction radiale R, de sorte que les cavités ont chacune une section sensiblement carrée.

Dans cet exemple, la plupart des cavités sont chacune radialement adjacente à au moins trois autres cavités. Par exemple, la cavité C5 est adjacente aux cavités C6, C7 et C8. Les cavités C5 et C8 sont délimitées par un noeud N1 formé par l'intersection de deux parois 238 et 239. La cavité C5 est séparée de la cavité C6 par une paroi 238, et de la cavité C7 par une paroi 239.

Les parois 238 et 239 sont pleines et empêchent donc toute circulation de gaz entre cavités adjacentes.

La dimension axiale de la pièce d'usure 23 dépend notamment du nombre et de la dimension des léchettes 25.

La dimension circonférentielle de la pièce d'usure 23 peut varier selon que la partie fixe 21 est pourvue d'une unique ou de plusieurs pièces d'usure 23. Dans le premier cas, la pièce d'usure 23 forme typiquement un anneau centré sur l'axe central A1, auquel cas sa dimension circonférentielle est égale à 360°. Dans le second cas, la partie fixe 21 peut comprendre plusieurs pièces d'usure 23 agencées circonférentiellement bout à bout de manière à former ensemble un anneau centré sur ledit axe central A1, auquel cas la dimension circonférentielle de chacune des pièces d'usure 23 est inférieure à 360°. Cela s'applique quel que soit le mode de réalisation décrit ci-dessus.

Concernant la fabrication de la pièce d'usure 23, celle-ci peut être réalisée par fabrication additive, en particulier à l'aide d'un procédé de fusion sélective par laser de couches de poudre métallique.

Après fabrication de la pièce d'usure 23, les cavités sont susceptibles de contenir de la poudre résiduelle qu'il convient d'évacuer avant mise en oeuvre du joint d'étanchéité dynamique.

La poudre peut être évacuée :
- dans les exemples des figures 4 à 6, par les orifices 232,
- dans l'exemple des figures 7 et 8, par les ouvertures constituées par les branches 235 et/ou par les extrémités circonférentielles des cavités si la pièce d'usure 23 ne forme pas un anneau fermé,
- dans les exemples des figures 9 à 14, par les extrémités circonférentielles des cavités si la pièce d'usure 23 ne forme pas un anneau fermé, et/ou par des ouvertures (non représentées) entre cavités adjacentes.

Les cavités ou ouvertures destinées à l'évacuation de poudre peuvent avoir une section de toute forme, par exemple en losange, carré, rond, triangle, ou encore hexagone, pourvu que celles-ci soient suffisamment petites pour limiter la circulation de gaz entre cavités radialement adjacentes.

Afin d'améliorer l'abradabilité de la pièce d'usure 23, celle-ci ainsi que l'élément de support 24 de la partie fixe 21 peuvent être fabriqués d'un seul tenant, à l'aide d'un procédé de fabrication additive.

Les exemples qui viennent d'être décrits ne sont nullement limitatifs.

A titre d'exemple, les parois délimitant deux cavités adjacentes peuvent avoir une épaisseur de l'ordre de 0,08 mm et les cavités peuvent avoir une dimension radiale comprise entre 0,8 mm et 2 mm.

## Revendications

1. Joint d'étanchéité dynamique (20) pour turbomachine (10) d'aéronef, comprenant une partie fixe (21) pourvue d'au moins une pièce d'usure (23) abradable et une partie mobile (22) en rotation autour d'un axe central (A1), la partie mobile (22) comprenant au moins une léchette (25) agencée pour interagir avec l'au moins une pièce d'usure (23) lors de la rotation de la partie mobile (22) autour de l'axe central (A1), **caractérisé en ce que** l'au moins une pièce d'usure (23) comporte une structure formant des cavités agencées en une ou plusieurs séries de sorte que, dans chaque série, les cavités de cette série sont superposées radialement par rapport à l'axe central (A1), ladite structure étant conformée au moins pour limiter la circulation de gaz entre chaque paire de cavités radialement adjacentes, **caractérisé en ce que** chaque cavité de l'au moins une pièce d'usure (23) constituant un canal s'étend circonférentiellement par rapport à l'axe central (A1) sur toute la dimension circonférentielle de la pièce d'usure (23).

2. Joint d'étanchéité dynamique (20) selon la revendication 1, dans lequel ladite structure de l'au moins une pièce d'usure (23) forme, entre chaque paire de cavités radialement adjacentes, une paroi pleine (237) empêchant toute circulation de gaz de l'une à l'autre de ces cavités.

3. Joint d'étanchéité dynamique (20) selon la revendication 1, dans lequel ladite structure de l'au moins une pièce d'usure (23) forme, entre chaque paire de cavités radialement adjacentes, un obstacle (235) ménageant une ouverture (D1) entre ces cavités de manière à limiter la circulation de gaz de l'une à l'autre de ces cavités.

4. Joint d'étanchéité dynamique (20) selon l'une quelconque des revendications 1 à 3, dans lequel l'au moins une pièce d'usure (23) comporte plusieurs séries de cavités s'étendant circonférentiellement par rapport à l'axe central (A1).

5. Joint d'étanchéité dynamique (20) selon l'une quelconque des revendications 1 à 4, dans lequel la partie fixe (21) est pourvue d'une unique pièce d'usure (23) formant un anneau centré sur ledit axe central (A1).

6. Joint d'étanchéité dynamique (20) selon l'une quelconque des revendications 1 à 4, dans lequel la partie fixe (21) est pourvue de plusieurs pièces d'usure (23) agencées circonférentiellement bout à bout de manière à former ensemble un anneau centré sur ledit axe central (A1).

7. Turbomachine (10) d'aéronef, comprenant un joint d'étanchéité dynamique (20) selon l'une quelconque des revendications 1 à 6.

8. Procédé de fabrication d'un joint d'étanchéité dynamique (20) selon l'une quelconque des revendications 1 à 6, **caractérisé en ce qu'**il comprend une étape de fabrication additive de l'au moins une pièce d'usure (23).

## Patentansprüche

1. Dynamische Dichtung (20) für ein Turbotriebwerk (10) eines Flugzeugs, umfassend einen festen Teil (21), der mit mindestens einem abreibbaren Verschleißteil (23) versehen ist, und einen um eine Mittenachse (A1) drehbeweglichen Teil (22), wobei der bewegliche Teil (22) mindestens eine Dichtungslippe (25) umfasst, die angeordnet ist, um bei der Drehung des beweglichen Teils (22) um die Mittenachse (A1) mit dem mindestens einen Verschleißteil (23) zusammenzuwirken, **dadurch gekennzeichnet, dass** das mindestens eine Verschleißteil (23) eine Struktur beinhaltet, die Hohlräume bildet, die in einer oder mehreren Reihen derart angeordnet sind, dass in jeder Reihe die Hohlräume dieser Reihe in Bezug auf die Mittenachse (A1) radial überlagert sind, wobei die Struktur mindestens angepasst ist, um die Gaszirkulation zwischen jedem Paar an radial benachbarten Hohlräumen zu begrenzen,
**dadurch gekennzeichnet, dass** jeder Hohlraum des mindestens einen Verschleißteils (23) einen Kanal darstellt, der sich umfänglich in Bezug auf die Mittenachse (A1) über die gesamte Umfangsabmessung des Verschleißteils (23) erstreckt.

2. Dynamische Dichtung (20) nach Anspruch 1, wobei die Struktur des mindestens einen Verschleißteils (23) zwischen jedem Paar an radial benachbarten Hohlräumen eine volle Wand (237) bildet, die jedwede Gaszirkulation von dem einen zum anderen dieser Hohlräume verhindert.

3. Dynamische Dichtung (20) nach Anspruch 1, wobei die Struktur des mindestens einen Verschleißteils (23) zwischen jedem Paar an radial benachbarten Hohlräumen ein Hindernis (235) bildet, das eine Öffnung (D1) zwischen diesen Hohlräumen vorsieht, um die Gaszirkulation von dem einen zum anderen dieser Hohlräume zu begrenzen.

4. Dynamische Dichtung (20) nach einem der Ansprüche 1 bis 3, wobei das mindestens eine Verschleißteil (23) mehrere Reihen an Hohlräumen beinhaltet, die sich umfänglich in Bezug auf die Mittenachse (A1) erstrecken.

5. Dynamische Dichtung (20) nach einem der Ansprüche 1 bis 4, wobei der feste Teil (21) mit einem einzigen Verschleißteil (23) versehen ist, das einen auf der Mittenachse (A1) zentrierten Ring bildet.

6. Dynamische Dichtung (20) nach einem der Ansprüche 1 bis 4, wobei der feste Teil (21) mit mehreren Verschleißteilen (23) versehen ist, die umfänglich derart aneinander angeordnet sind, um gemeinsam einen auf der Mittenachse (A1) zentrierten Ring zu bilden.

7. Turbotriebwerk (10) eines Flugzeugs, umfassend eine dynamische Dichtung (20) nach einem der Ansprüche 1 bis 6.

8. Verfahren zur Herstellung einer dynamischen Dichtung (20) nach einem der Ansprüche 1 bis 6, **dadurch gekennzeichnet, dass** es einen Schritt zur additiven Herstellung des mindestens einen Verschleißteils (23) umfasst.

## Claims

1. A dynamic seal (20) for an aircraft turbomachine (10), comprising a stationary part (21) provided with at least one abradable wear part (23) and a part (22) rotatably movable about a central axis (A1), the movable part (22) comprising at least one strip seal (25) arranged to interact with the at least one wear part (23) during rotation of the movable part (22) about the central axis (A1), **characterised in that** the at least one wear part (23) includes a structure forming cavities arranged in one or more series so that in each series, the cavities of that series are radially superimposed with respect to the central axis (A1), said structure being shaped at least to limit gas circulation between each pair of radially adjacent cavities, **characterised in that** each cavity of the at least one wear part (23) constituting a channel extends circumferentially with respect to the central axis (A1) over the whole circumferential dimension of the wear part (23).

2. The dynamic seal (20) according to claim 1, wherein said structure of the at least one wear part (23) forms, between each pair of radially adjacent cavities, a solid wall (237) preventing any gas circulation from one of these cavities to the other.

3. The dynamic seal (20) according to claim 1, wherein said structure of the at least one wear part (23) forms, between each pair of radially adjacent cavities, an obstacle (235) providing an opening (D1) between these cavities so as to limit gas circulation from one of these cavities to the other.

4. The dynamic seal (20) according to any of claims 1 to 3, wherein the at least one wear part (23) includes several series of cavities extending circumferentially with respect to the central axis (A1).

5. The dynamic seal (20) according to any of claims 1 to 4, wherein the stationary part (21) is provided with a single wear part (23) forming a ring centred on said central axis (A1).

6. The dynamic seal (20) according to any of claims 1 to 4, wherein the stationary part (21) is provided with several wear parts (23) arranged circumferentially end to end so as to form together a ring centred on said central axis (A1).

7. An aircraft turbomachine (10), comprising a dynamic seal (20) according to any of claims 1 to 6.

8. A method for manufacturing a dynamic seal (20) according to any of claims 1 to 6, **characterised in that** it comprises a step of additively manufacturing the at least one wear part (23).
